# EUROPÄISCHE PATENTSCHRIFT

(11) **EP 2 222 534 B1**
(45) Veröffentlichungstag und Bekanntmachung des Hinweises auf die Patenterteilung: **25.02.2015**
(21) Anmeldenummer: 08847377.2
(22) Anmeldetag: 05.11.2008
(51) Int. Cl.: B62D 21/11

(54) **VORDERACHSTRÄGER FÜR KRAFTFAHRZEUGE**
FRONT AXLE CARRIER FOR MOTOR VEHICLES
SUPPORT D'ESSIEU AVANT POUR VÉHICULES AUTOMOBILES

(30) Priorität: 08.11.2007 DE 102007053159; 28.12.2007 DE 102007063319; 30.04.2008 DE 102008021792; 09.10.2008 DE 102008050886
(43) Veröffentlichungstag der Anmeldung: 01.09.2010
(73) Patentinhaber: KSM Castings Group GmbH, 31137 Hildesheim (DE)
(72) Erfinder: BUSCHJOHANN, Thomas, 31171 Nordstemmen (DE); KAUERT, Heiko, 15827 Blankenfelde (DE); EICKMANN, Jürgen, 31174 Schellerten (DE); HENNINGS, Andreas, 69126 Heidelberg (DE); BÜHRIG-POLACZEK, Andreas, 52066 Aachen (DE); WÜRKER, Lars, 42897 Remscheid (DE); GREVEN, Klaus, 31141 Hildesheim (DE)
(74) Vertreter: Patentanwälte Thömen & Körner
(86) Internationale Anmeldenummer: PCT/DE2008/001817
(87) Internationale Veröffentlichungsnummer: WO 2009/059592

(56) Entgegenhaltungen:
- EP-A- 1 304 280
- EP-A- 1 386 827
- EP-A- 1 787 894
- WO-A-02/26548
- WO-A-2007/031060

## Beschreibung

Die Erfindung betrifft einen Vorderachsträger für Kraftfahrzeuge nach dem Oberbegriff des Anspruchs 1.

Solche Träger, die auch als Schemel, Rahmen oder Hilfsrahmen bezeichnet werden, werden, nachdem sie mit Aggregaten bzw. Hilfsaggregaten versehen sind, als vormontierte Einheiten oder Module an Fahrzeugaufbauten, zum Beispiel an der Karosserie und/ oder an Längsträgern eines Fahrzeuges befestigt.

Ein Vorderachsträger nach dem Oberbegriff des Anspruchs 1 ist beispielsweise in der WO 2007/031060 A1 offenbart, die auf den gleichen Anmelder zurückgeht. WO 02/26548 A1 und EP 1 304 280 A2 offenbaren weitere Hilfsrahmen.

Ausgehend von diesem Stand der Technik liegt der Erfindung die Aufgabe zugrunde, einen Vorderachsträger der eingangs genannten Art im Hinblick auf Gewicht und Kosten weiter zu optimieren, ohne dass sich die Optimierung am Vorderachsträger nachteilig auf die Fahrwerkskinematik auswirkt.

Der Erfindung liegt hierbei weiterhin die Aufgabe zugrunde, einen Vorderachsträger der eingangs genannten Art bereitzustellen, welcher eine verbesserte Steifigkeit, insbesondere in Querrichtung, aufweist, um die am Vorderachsträger angreifenden hohen statischen als auch dynamischen Kräfte abzufangen. Zudem soll ein solcher Vorderachsträger besonders biege- und verwindungssteif ausgebildet sein.

Eine weitere Aufgabe der Erfindung besteht hierbei darin, einen solchen Vorderachsträger bereitzustellen, welcher eine besonders hohe Festigkeit aufweist und große Dauerbelastungen, insbesondere auch an dessen Anbindungs- bzw. Anschlussstellen oder Aufnahmen bzw. Ausnehmungen, aushält.

Eine weitere Aufgabe besteht hierbei darin, einen Vorderachsträger der eingangs genannten Art bereitzustellen, der im Fahrbetrieb auftretende Feder- bzw. Dämpferkräfte sowie Zug- und Druckschläge optimal aufnimmt bzw. abfängt.

Der Erfindung liegt hierbei weiterhin die Aufgabe zugrunde, einen Vorderachsträger der eingangs genannten Art bereitzustellen, welcher möglichst viele zum Fahrwerk und/oder Antrieb zugehörige Teile, welche aus Montage-, Karosseriebelastungs-, Komfort- und Steifigkeitsanforderungen her nicht unmittelbar am Karosserieaufbau befestigt werden, aufnimmt. Insbesondere soll ein gattungsgemäßer Vorderachsträger bereitgestellt werden, der besonders einfach die Vormontage und die Voreinstellung bzw. Justierung dieser Teile in einem Modul ermöglicht und dann besonders einfach am Karosserieaufbau befestigt werden kann. Insbesondere soll auch die Wartung, Reparatur, Montage und Demontage dieser Teile erleichtert werden. Zudem soll ein Vorderachsträger der eingangs genannten Art bereitgestellt werden, der nur wenig Bauraum im Kraftfahrzeug in Anspruch nimmt.

Eine weitere Aufgabe der Erfindung besteht hierbei darin, einen gattungsgemäßen Vorderachsträger bereitzustellen, welcher die Weiterleitung von Geräuschen und von Schwingungen, insbesondere von Aggregatschwingungen, besser dämpft. Zudem soll er die Anforderungen an die Eigenfrequenz erfüllen. Au ßerdem soll ein solcher Vorderachsträger bereitgestellt werden, der ein optimiertes Verhalten im Crashfall zeigt.

Diese Aufgabe wird bei einem Vorderachsträger der eingangs genannten Art durch das kennzeichnende Merkmal des Anspruchs 1 gelöst. Weiterbildungen und vorteilhafte Ausgestaltungen der Erfindung ergeben sich aus den übrigen Ansprüchen.

Dadurch, dass wenigstens einzelne der Aufnahmen über stabförmige Verbindungselemente fachwerkartig im Vorderachsträger integriert sind, wird zum einen Material und mithin Gewicht am Fahrzeug selbst sowie Kraftstoff eingespart, zum andern lassen sich dadurch aber auch die Transportkosten und die gefederten Massen verringern.

Die stabförmigen Verbindungselemente, die quasi materiallose Fächer begrenzen, sorgen hierbei für die erforderliche Steifigkeit ohne nachteiligen Einfluss auf die Fahrwerkskinematik. Insofern können die stabförmigen Verbindungselemente auch als stabförmige Versteifungselemente bezeichnet werden.

Wenn im Rahmen der vorliegenden Erfindung von Aufnahmen gesprochen wird, so sind damit auch Ausnehmungen umfasst.

Erfindungsgemäß weist der Vorderachsträgers in Querrichtung zwischen den in Fahrtrichtung vorderen Aufnahmen zur Lagerung jedes der Radführungsglieder wenigstens ein Versteifungselement in Form eines horizontal angeordneten Flächenelements auf.

Ein derartiges Versteifungselement nimmt die in Querrichtung auf die vorgenannten Aufnahmen wirkenden Kräfte auf. Dadurch, dass das Versteifungselement flächig ausgebildet ist, wird zudem die Steifigkeit des in Fahrtrichtung vorderen Aufnahmegliedes der vorgenannten Aufnahme bei geringsmöglichem Materialeinsatz erhöht. Zudem kann ein derartiges Versteifungselement derart angeordnet sein, dass andere Aggregate, insbesondere Motor und Getriebe, dicht am Vorderachsträger positioniert werden können. Es ist so weniger Bauraum erforderlich.

Das horizontal angeordnete Flächenelement ist erfindungsgemäß eben ausgebildet. Der in Fahrtrichtung weisende Rand des Flächenelements kann zusätzlich oder alternativ zur ebenen Ausbildung eine halbovalförmige Einbuchtung aufweisen.

Eine Weiterbildung der Erfindung sieht vor, dass zwei, vorzugsweise vier, besonders bevorzugt sechs, weiter besonders bevorzugt acht, weiter besonders bevorzugt zehn der Aufnahmen über stabförmige Verbindungselemente fachwerkartig im Vorderachsträger integriert, vorzugsweise direkt miteinander verbunden sind.

Dadurch lässt sich vorteilhaft weiter Gewicht einsparen, wobei die erforderliche Steifigkeit des Vorderachsträgers erhalten bleibt. Durch eine derartige Ausgestaltung sind optimale Festigkeitswerte bei geringstmöglichem Materialeinsatz zu verwirklichen.

Vorteilhaft ist vorgesehen, dass die in Fahrtrichtung hintere Aufnahme zur Lagerung jedes der Radführungsglieder zumindest annähernd vertikal zur Fahrzeuglängsachse beabstandete Aufnahmeglieder besitzt, zur umgreifenden Halterung des in Fahrtrichtung hinteren Lagers am Radführungsglied, wobei vorzugsweise jedes Aufnahmeglied über wenigstens ein, vorzugsweise über wenigstens zwei stabförmige Verbindungselemente im Vorderachsträger integriert ist. Eine derartige materialarme Aufnahme erfüllt ihre Aufgabe ohne negativen Einfluss auf die erforderliche Integration im Vorderachsträger.

Vorzugsweise ist wenigstens ein, vorzugsweise jedes Aufnahmeglied über ein stabförmiges Verbindungselement mit einer ersten Aufnahme für Befestigungsmittel zur Festlegung des Vorderachsträgers am Fahrzeugaufbau verbunden ist.

Eine vorteilhafte Ausgestaltung der Erfindung sieht vor, dass wenigstens ein Aufnahmeglied über ein stabförmiges Verbindungselement mit der in Fahrtrichtung vorderen Aufnahme zur Lagerung jedes der Radführungsglieder verbunden ist, wobei das stabförmige Verbindungselement vorzugsweise annährend in Fahrzeuglängsrichtung verläuft.

Zweckmäßigerweise ist vorgesehen, dass die die in Fahrtrichtung vordere Aufnahme zur Lagerung jedes der Radführungsglieder zwei zumindest annähernd in Fahrzeuglängsachse beabstandete Aufnahmeglieder besitzt, zur U-förmig umgreifenden Halterung des in Fahrtrichtung vorderen Lagers am Radführungsglied.

Weiterhin ist vorgesehen, dass das horizontal angeordnete Flächenelement in einer Ebene unterhalb der in den Aufnahmegliedern vorgesehenen Bohrungen angeordnet ist.

Aggregate, insbesondere Motor und Getriebe, lassen sich so sehr dicht am Vorderachsträger positionieren, so dass weniger Bauraum im Fahrzeug erforderlich ist.

Vorzugsweise ist eine erste Aufnahme zur Befestigung des Vorderachsträgers am Fahrzeugaufbau vorgesehen, welche das in Fahrtrichtung hintere Ende des Vorderachsträgers bildet.

Vorzugsweise ist eine zweite Aufnahme zur Befestigung des Vorderachsträgers am Fahrzeugaufbau vorgesehen, welche in einen Ausleger integriert im unmittelbaren Bereich der in Fahrtrichtung vorderen Aufnahme angeordnet ist.

Der Vorderachsträger weist vorteilhaft ein annährend zentrales, an die Aufnahme für die Lagerung der Pendelstütze zumindest teilweise anschließendes und entgegengesetzt der Fahrtrichtung sich aufweitendes flächiges Versteifungselement auf.

Durch eine derartige Ausgestaltung sind optimale Festigkeitswerte bei geringstmöglichem Materialeinsatz zu verwirklichen, wobei eine derartige Ausgestaltung insbesondere vertikalen Schwingungen entgegenwirkt.

Vorzugsweise ist das flächige Versteifungselement wenigstens teilweise von Verstärkungsrippen begrenzt.

Weiterhin ist vorgesehen, dass das flächige Versteifungselement zum entgegengesetzt der Fahrtrichtung hinteren Rand hin eine Art Wulst bildet, die auf Unterseite hohl ausgebildet ist und einen V-Querschnitt besitzt.

Durch eine derartige Ausgestaltung sind optimale Festigkeitswerte bei geringstmöglichem Materialeinsatz zu verwirklichen.

Das flächige Versteifungselement weist vorteilhaft am entgegengesetzt der Fahrtrichtung hinteren Rand Knotenpunkte auf, in denen wenigstens einzelne, vorzugsweise mehre stabförmige Verbindungselemente zusammenlaufen.

Eine vorteilhafte Ausgestaltung der Erfindung sieht vor, dass die erste Aufnahme zur Befestigung des Vorderachsträgers am Fahrzeugaufbau über wenigstens ein stabförmiges Verbindungselement mit dem flächigen Versteifungselement verbunden ist.

Weiterhin ist es vorteilhaft, dass auf dem flächigen Versteifungselement wenigstens eine Verstärkungsrippe vorgesehen ist, die vorzugsweise in Fahrzeuglängsrichtung wenigstens teilweise zwischen dem hinteren Rand des flächigen Versteifungselements und der Aufnahme für die Lagerung der Pendelstütze angeordnet ist.

Vorteilhaft ist der Vorderachsträger aus Leichtmetall, vorzugsweise aus einer Aluminium-Legierung, hergestellt. Weiterhin kann es vorteilhaft sein, wenn das Bauteil in einem Aluminiumgussverfahren, vorzugsweise im Kokillengussverfahren, besonders bevorzugt im Horizontalguss- oder Kippkokillengussverfahren, hergestellt ist.

Eine vorteilhafte Ausgestaltung sieht vor, dass die Fläche der durch die stabförmigen Verbindungselemente begrenzten Fächer in Draufsicht auf den Vorderachsträger größer ist als die in Draufsicht auf den Vorderachsträger nicht durchgängigen Fläche des Vorderachsträgers, vorzugsweise zumindest größer ist als die in Draufsicht auf den Vorderachsträger nicht durchgängigen Fläche des Versteifungselements.

Weiterhin ist es vorteilhaft, wenn der Vorderachsträger nur noch zwei Aufnahmen für die Befestigung des Lenkgetriebes aufweist.

Gemäß einer Weiterbildung ist vorgesehen, dass die Aufnahmen für die Befestigung des Lenkgetriebes und/oder die Aufnahmen für die Befestigung des Stabilisators über Stege an die stabförmigen Verbindungselemente angebunden sind.

Bei einem Vorderachsträger für Kraftfahrzeuge, bei dem jeweils zwei in Fahrzeuglängsrichtung voneinander beabstandete Aufnahmen für die Lagerstellen zur Schwenklagerung je eines von zwei Radführungsgliedern, wie Quer- bzw. Dreieckslenker; und Aufnahmen zur Befestigung des Vorderachsträgers als vorgefertigte Einheit mitsamt vormontierten Aggregaten am Fahrzeugaufbau vorgesehen sind, sowie wenigstens einzelne der nachfolgend angeführten Aufnahmen für
- die Befestigung des Lenkgetriebes
- die Befestigung des Stabilisators
- die Lagerung einer Pendelstütze
und der Vorderachsträger als mit diesen Aufnahmen einstückiges und diese untereinander verbindendes Bauteil hergestellt ist, ist bevorzugt vorgesehen, dass die Aufnahmen derart miteinander verbunden sind, dass im Vorderachsträger gewichtsreduzierende Aussparungen in Form von Durchbrüchen und/oder einseitig offenen Aushöhlungen verbleiben, ohne dass die Fahrwerkskinematik nachteilig beeinflusst wird.

Weiterhin ist vorgesehen, dass wenigstens einzelne der Aufnahmen wenigstens teilweise über stabförmige und/oder flächenförmige Verbindungselemente im Vorderachsträger integriert und/oder miteinander verbunden sind.

Weiterhin ist vorgesehen, dass wenigstens einzelne der Aufnahmen wenigstens teilweise über offenprofilförmige Verbindungselemente, insbesondere solche mit im Wesentlichen T-, U-, V-, L-, X-, Y-, S-, Z- und/oder Doppel-T-förmigen Querschnitt, integriert und/oder miteinander verbunden sind.

Weiterhin ist vorgesehen, dass die offenprofilförmigen Verbindungselemente verschieden, vorzugsweise horizontal oder vertikal, ausgerichtet sind.

Zweckmäßigerweise ist vorgesehen, dass einzelne Schenkel der offenprofilförmigen Verbindungselemente als Verstärkungsrippen ausgelegt sind.

Besonders vorteilhaft ist es, wenn die Verbindungselemente zusätzliche Verstärkungsrippen, -gurte, -sicken, -wulste, -stege und/oder -durchbrüche aufweisen.

Vorzugsweise besitzt die in Fahrtrichtung hintere Aufnahme zur Lagerung jedes der Radführungsglieder zumindest annähernd vertikal zur Fahrzeuglängsachse beabstandete Aufnahmeglieder zur umgreifenden Halterung des in Fahrtrichtung hinteren Lagers am Radführungsglied, wobei die Aufnahmeglieder über eine U-förmige Lasche miteinander verbunden und im Vorderachsträger integriert sind.

Weiterhin ist vorgesehen, dass die Lasche wenigstens teilweise, vorzugsweise auf ihrer Außenseite, einen verstärkten Rand aufweist.

Zweckmäßigerweise ist vorgesehen, dass die Lasche über wenigstens ein Verbindungselement mit einer ersten Aufnahme für Befestigungsmittel zur Festlegung des Vorderachsträgers am Fahrzeugaufbau verbunden ist.

Weiterhin ist vorgesehen, dass die Laschen mit den ersten Aufnahmen sowie die ersten Aufnahmen untereinander über ein einziges stabförmiges oder offenprofilförmiges Verbindungselement verbunden sind, wobei das offenprofilförmige Verbindungselement vorzugsweise einen U-förmigen Querschnitt hat.

Weiterhin ist vorgesehen, dass an dem die ersten Aufnahmen untereinander verbindenden Verbindungselement, vorzugsweise auf der entgegen der Fahrtrichtung weisenden Seite, wenigstens eine, vorzugsweise zwei Aufnahmen für Befestigungsmittel zur Festlegung der Abgasanlage vorgesehen sind.

Weiterhin ist vorgesehen, dass die Aufnahmen für Befestigungsmittel zur Festlegung der Abgasanlage und/oder die ersten Aufnahmen in und/oder an der entgegen der Fahrtrichtung weisenden Seitenwand, die durch einen der Schenkel des U-förmigen Verbindungselement gebildet ist, und/oder an und/oder in einer daran anschließenden flächigen Verstärkungslippe integriert sind .

Besonders vorteilhaft ist es, wenn das die ersten Aufnahmen untereinander verbindende Verbindungselement in und/oder entgegen der Fahrtrichtung an seiner Unterseite eine flächige, im Wesentlichen horizontal angeordnete Verstärkungslippe aufweist.

Weiterhin ist vorgesehen, dass innerhalb des die Aufnahmen, Laschen und/oder ersten Aufnahmen verbindenden profilförmigen Verbindungselements Verstärkungsrippen vorgesehen sind, die vorzugsweise gerade oder zickzackförmig von einer Seitenwand zur anderen Seitenwand und/oder vorzugsweise von den in und/oder an der einen Seitenwand angeordneten Aufnahmen vorzugsweise schräggestellt und/oder vorzugsweise gegenläufig zur gegenüberliegenden Seitenwand führen.

Weiterhin ist vorgesehen, dass die die Aufnahmeglieder verbindende Lasche über ein Verbindungselement mit der in Fahrtrichtung angeordneten Aufnahme für die Befestigung des Lenkgetriebes verbunden ist.

Weiterhin ist vorgesehen, dass die Aufnahme für die Befestigung des Lenkgetriebes über ein vorzugsweise zumindest teilweise stabförmiges Verbindungselement mit der in Fahrtrichtung angeordneten zweiten Aufnahme zur Befestigung des Vorderachsträgers am Fahrzeugaufbau verbunden ist, welche ihrerseits vorzugsweise in einem Ausleger integriert unmittelbar mit der in Fahrtrichtung vorderen Aufnahme zur Lagerung jedes der Radführungsglieder verbunden ist.

Vorteilhaft ist vorgesehen, dass an dem die Aufnahme für die Befestigung des Lenkgetriebes mit der zweiten Aufnahme bzw. dem Ausleger verbindenden Verbindungselement eine der Aufnahmen für die Befestigung des Stabilisators angebunden ist.

Weiterhin ist vorgesehen, dass die in Fahrtrichtung vordere Aufnahme zur Lagerung jedes der Radführungsglieder zwei zumindest annähernd in Fahrzeuglängsachse beabstandete Aufnahmeglieder besitzt, zur U-förmig umgreifenden Halterung des in Fahrtrichtung vorderen Lagers am Radführungsglied, wobei das eine Aufnahmeglied vorzugsweise unmittelbar an den Ausleger der Aufnahme anschließt und das andere Aufnahmeglied innerhalb des kurzen Schenkels einer L-förmigen Lasche, die mit ihrem nicht das Aufnahmeglied aufweisenden Ende vorzugsweise an den Ausleger anschließt, integriert ist.

Vorzugsweise weist die Lasche wenigstens teilweise, vorzugsweise auf ihrer Außenseite, einen verstärkten Rand auf.

Eine Weiterbildung sieht vor, dass der Ausleger eine Aussparung aufweist, die einseitig oder beidseitig eingebracht ist.

Vorzugsweise weist der Ausleger eine durchgehende Aussparung auf.

Eine vorteilhafte Ausgestaltung der Erfindung sieht vor, dass innerhalb der Aussparung eine Aufnahme für die Befestigung des Stabilisators vorgesehen ist, die bei einer durchgehenden Aushöhlung vorzugsweise über einen Steg an die Innenwand des Auslegers angeschlossen ist oder bei einer nicht durchgehenden Aushöhlung in der verbleibenden Fläche integriert und vorzugsweise an der Innenwand des Auslegers direkt angeordnet und/oder vorzugsweise mit wenigstens einer Versteifungsrippe versehen mit der oder den Innenwänden oder Versteifungsflächen des Auslegers verbunden ist.

Zweckmäßig ist es, wenn der Vorderachsträger in Querrichtung ein die Ausleger verbindendes Versteifungselement aufweist, in dem oder an dem die Aufnahme für die Lagerung der Pendelstütze angeordnet ist.

Weiterhin ist vorgesehen, dass das Versteifungselement stabförmig ausgebildet ist.

Vorzugsweise ist das Versteifungselement offenprofilförmig, insbesondere mit im Wesentlichen T-, U-, V-, oder L-förmigen Querschnitt ausgebildet, wobei vorzugsweise die Kanten und Ränder des Versteifungselements zumindest teilweise verstärkt sind. Vorzugsweise weist das Versteifungselement im Bereich der Aufnahme für die Lagerung der Pendelstütze wenigstens eine, vorzugsweise zwei, nämlich jeweils eine zur jeder Seite der Aufnahme und mit dieser verbundene versteifende Schrägfläche auf, die vorzugsweise von einer im Wesentlichen horizontal angeordneten Teilfläche des Versteifungselements entgegengesetzt der Fahrrichtung nach unten abfällt.

Eine Weiterbildung sieht vor, dass an dem Versteifungselement auf der in und/oder entgegengesetzt der Fahrtrichtung weisenden Seite eine oder mehrere horizontal angeordnete, flächige Verstärkungslippen angeordnet sind.

Vorteilhaft ist vorgesehen, dass die horizontal angeordnete Verstärkungslippe eben ausgebildet ist.

Zweckmäßigerweise ist vorgesehen, dass die horizontal angeordnete Verstärkungslippe in einer Ebene unterhalb der in den Aufnahmegliedern vorgesehenen Bohrungen angeordnet ist.

Weiterhin ist vorgesehen, dass eine der Aufnahmen für die Befestigung des Lenkgetriebes über ein vorzugsweise stabförmiges Verbindungselement mit dem Versteifungselement verbunden ist.

Weiterhin ist vorgesehen, dass die erste Aufnahme zur Befestigung des Vorderachsträgers am Fahrzeugaufbau das hintere Ende des Vorderachsträgers bildet.

Vorteilhaft ist vorgesehen, dass die Aufnahme für die Lagerung der Pendelstütze ein in Richtung einer der ersten Aufnahmen verlaufendes Verbindungselement aufweist und mit dieser direkt oder indirekt verbunden ist.

Weiterhin ist vorgesehen, dass die Aufnahme für die Lagerung der Pendelstütze über ein Verbindungselement mit einer der Aufnahmen für die Befestigung des Lenkgetriebes verbunden ist.

Vorzugsweise weist das Versteifungselement an den zu den Auslegern führende Enden Knotenpunkte auf, in denen wenigstens einzelne, vorzugsweise mehrere vorzugsweise stabförmige Verbindungselemente zusammenlaufen.

Weiterhin ist vorgesehen, dass der Vorderachsträger aus Leichtmetall, vorzugsweise aus einer Aluminium-Legierung, hergestellt ist.

Vorteilhaft ist vorgesehen, dass das Bauteil in einem Leichtmetall-, vorzugsweise Aluminiumgussverfahren, besonders bevorzugt im Kokillengussverfahren, hergestellt ist.

Weiterhin ist vorgesehen, dass die Fläche der durch die Verbindungselemente begrenzten Aussparungen in Draufsicht auf den Vorderachsträger größer ist als die in Draufsicht auf den Vorderachsträger nicht durchgängige Fläche des Vorderachsträgers.

Gemäß einer Weiterbildung der Erfindung ist vorgesehen, dass der Vorderachsträger zwei Aufnahmen für die Befestigung des Lenkgetriebes aufweist.

Vorzugsweise ist vorgesehen, dass die Aufnahmen für die Befestigung des Lenkgetriebes und/oder die Aufnahmen für die Befestigung des Stabilisators an die stabförmigen Verbindungselemente über Stege angebunden sind.

Vorzugsweise besteht der erfindungsgemäße Vorderachsträger aus einer Al-Gusslegierung, wie sie in der WO 2007/025528 A2 offenbart ist. Der Offenbarungsgehalt dieser Veröffentlichung wird durch ausdrücklichen Verweis als zum Gegenstand der vorliegenden Anmeldung gehörig in diese aufgenommen.

Bevorzugt besteht der Vorderachsträger aus einer Al-Gusslegierung, die mindestens fünf der nachfolgend angeführten Legierungsbestandteile

| | |
|---|---|
| Si: | 2,5 bis 3,3, vorzugsweise 2,7 bis 3,1 Gew.-% |
| Mg: | 0,2 bis 0,7, vorzugsweise 0,3 bis 0,6 Gew.-% |
| Fe: | < 0,18, vorzugsweise 0,05 bis 0,16 Gew.-% |
| Mn: | < 0,5, vorzugsweise 0,05 bis 0,4 Gew.-% |
| Ti: | < 0,1, vorzugsweise 0,01 bis 0,08 Gew.-% |
| Sr: | < 0,03, vorzugsweise 0,01 bis 0,03 Gew.-% |
| Sonstige: | < 0,1 Gew.-% |

und zusätzlich Cr in einer die Festigkeit der Legierung steigernden Menge als weiteren Legierungsbestandteil enthält, jeweils zu 100 Gew.-% mit Al ergänzt.

Bevorzugt besteht der Vorderachsträger aus einer Al-Gusslegierung, die mindestens fünf der nachfolgend angeführten Legierungsbestandteile

| | |
|---|---|
| Si: | 2,5 bis 3,3, vorzugsweise 2,7 bis 3,1 Gew.-% |
| Mg: | 0,2 bis 0,7, vorzugsweise 0,3 bis 0,6 Gew.-% |
| Fe: | < 0,18, vorzugsweise 0,05 bis 0,16 Gew.-% |
| Mn: | < 0,5, vorzugsweise 0,05 bis 0,4 Gew.-% |
| Ti: | < 0,1, vorzugsweise 0,01 bis 0,08 Gew.-% |
| Sr: | < 0,03, vorzugsweise 0,01 bis 0,03 Gew.-% |
| Cr: | 0,3 bis 1,3, vorzugsweise 0,4 bis 1,0, besonders bevorzugt 0,5 bis 0,8 Gew.-% |
| Sonstige: | < 0,1 Gew.-% |

enthält, und jeweils zu 100 Gew.-% mit Al ergänzt ist.

Eine solche Al-Gusslegierung ist gegenüber dem Stand der Technik stärker, zäher und duktiler.

Das vorzugsweise Zulegieren von Cr in der genannten Größenordnung führt zu einer signifikanten Verbesserung der mechanischen Eigenschaften, die bereits im Gusszustand, insbesondere jedoch nach Lösungsglühen und gegebenenfalls Auslagern, zu verzeichnen ist.

Insbesondere hat sich gezeigt, dass durch solche Chromzusätze unerwünschte Eisenausscheidungen bereits im Gusszustand in eine günstigere Morphologie überführt werden können.

Für Fahrwerksanwendungen, insbesondere für radführende Bauteile, ergeben sich so insgesamt erhöhte mechanische Kennwerte.

Die erfindungsgemäßen Legierungen können herstellungsbedingte Verunreinigungen, z.B. Pb, Ni, Zn etc., enthalten, wie sie dem Fachmann allgemein bekannt sind.

Eine vorteilhafte Ausgestaltung der Erfindung sieht vor, dass zusätzlich CuNi durch gleichzeitiges Zulegieren als weiterer Legierungsbestandteil enthalten ist. Es hat sich gezeigt, dass alleinige Kupfer- oder Nickelzusätze zu keinen signifikanten Verbesserungen der mechanischen Eigenschaften führen. Das gleichzeitige Zulegieren von Kupfer und Nickel eröffnet jedoch neue Möglichkeiten der Anwendung der Legierung, insbesondere im Bereich außerhalb des Fahrwerks für temperaturbelastete Bauteile.

Die erfindungsgemäßen Legierungen weisen ein gegenüber bekannten Al-Gusslegierungen verbessertes Festigkeits-Dehnungsverhältnis auf.

Als Fertigungsverfahren für Werkstücke, Bauteile oder Teile für beziehungsweise von insbesondere Fahrwerksteilen von Kraftfahrzeugen aus der erfindungsgemäßen Gusslegierung ist grundsätzlich ein Dauerformgießverfahren geeignet. Aufgrund der sehr guten mechanischen Eigenschaften bei hochbeanspruchten Werkstücken, Bauteilen oder Teilen eignen sich besonders der Schwerkraft-Kokillenguss und der Niederdruck-Kokillenguss als Fertigungsverfahren. Als besonders bevorzugt hat sich hierbei das Gegendruck-Kokillengießverfahren (CPC-Verfahren) herausgestellt.

Es kann weiterhin vorteilhaft sein, wenn die Legierung korngefeint ist. Hierzu werden der Legierung so genannte Kornfeiner zugegeben. Kornfeinung ist eine Schmelzebehandlung, wobei unter dem Begriff "Kornfeinung" eine künstliche Erhöhung der Keimzahl in der Schmelze verstanden wird, die durch Einbringen und Verteilen von Fremdkeimen hervorgerufen wird. Dadurch wird insbesondere eine bessere Speisungsfähigkeit durch verbesserte Massenspeisung, eine verbesserte Formfüllungs- und Fließfähigkeit, eine Verringerung von Porositätsanfälligkeit und Warmrissneigung und eine dadurch erhöhte Duktilität sowie eine bessere Oberflächenbeschaffenheit der Gusslegierung erreicht.

Um die oben genannten Vorteile zu erzielen oder noch weiter zu entwickeln, ist es vorteilhaft, wenn die gegossenen Bauteile wärmebehandelt werden, insbesondere mit folgenden Parametern:

| | |
|---|---|
| Lösungsglühen | 490 bis 540°C für 1 bis 10h |
| Anlassen | 150 bis 200°C für 1 bis 10h |

Für manche Anwendungsfälle kann es aber auch vorteilhaft sein, lediglich eine einstufige Anlassbehandlung vorzunehmen, allgemein bekannt als beispielsweise T4, T5 oder 0.

Eine Festigkeitssteigerung der Gusstücke kann vorteilhaft durch Abschrecken der noch heißen Gussstücke in Wasser anstelle langsamer Abkühlung an der Luft erreicht werden.

Neben den bereits genannten Vorteilen, die Bauteile aus Legierungen gemäß der Erfindung aufweisen, kommt noch hinzu, dass wegen der fehlenden Legierungsbestandteile Cu und Zn die Korrosionsbeständigkeit bedeutend erhöht wird. Das Produkt ist auch relativ preiswert, weil keine dasselbe verteuernden Legierungszusätze, wie z.B. SE-Metalle, verwendet werden, es kann die übliche Schmelzbehandlung angewendet werden und es bedarf keines besonderen Aufwandes zur Kreislauftrennung. Ebenso wird aus Kostengründen vorzugsweise kein Ag als Legierungsbestandteil verwendet.

Es ist auch ein vorzügliches Festigkeits-Dehnungsverhältnis bei vorzüglicher Gießbarkeit vorhanden. Die Gießbarkeit ermöglicht zum einen ein von großen Fehlern, bekannt als Lunker, freies Gussstück, zum anderen wird die Mikrostruktur in einer solchen Weise positiv beeinflusst, dass die Anzahl innerer Kerben, die die Bruchdehnung verringern, möglichst gering gehalten wird.

Das Formfüllungsvermögen verbessert sich ebenfalls bei der erfindungsgemäßen Anwesenheit von Cr.

Nachfolgend wird die Erfindung anhand zweier Ausführungsbeispiele erläutert, die in der Zeichnung dargestellt sind. In dieser zeigen
- Fig. 1: eine perspektivische Darstellung von oben eines ersten Ausführungsbeispiels für einen erfindungsgemäßen Vorderachsträger in A) leicht schattierter Darstellung und B) als Liniendarstellung sowie
- Fig. 2: eine perspektivische Darstellung von oben eines zweiten Ausführungsbeispiels für einen erfindungsgemäßen Vorderachsträger in A) leicht schattierter Darstellung und B) als Liniendarstellung.

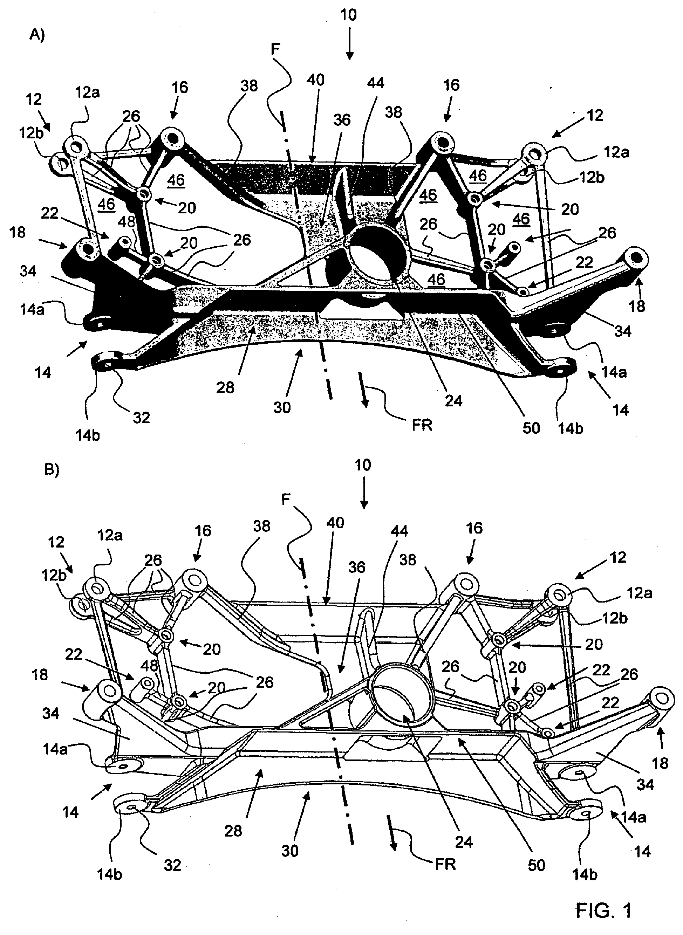

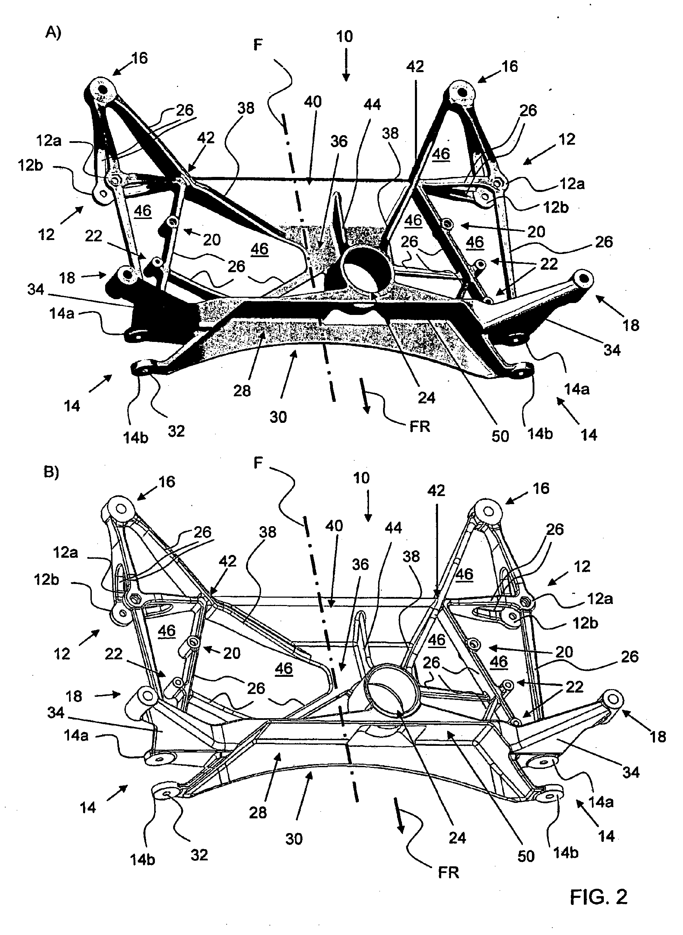

Die in den Fig. 1 und 2 dargestellten Vorderachsträger 10 für Kraftfahrzeuge umfassen jeweils zwei in Fahrzeuglängsrichtung F voneinander beabstandete Aufnahmen 12, 14 für die Lagerstellen zur Schwenklagerung je eines von zwei hier nicht dargestellten Querlenkern. Ferner sind jeweils zwei erste Aufnahmen 16 und zwei zweite Aufnahmen 18 zur Befestigung des Vorderachsträgers 10 am Fahrzeugaufbau vorgesehen.

Jeder Vorderachsträger 10 weist außerdem eine Aufnahme 24 für die Lagerung einer hier nicht dargestellten Pendelstütze und vier Aufnahmen 22 für die Befestigung eines hier nicht dargestellten Stabilisators auf.

Der in Fig. 1 dargestellte Vorderachsträger 10 weist weiterhin vier Aufnahmen 20 für die Befestigung des hier nicht dargestellten Lenkgetriebes auf, während für den in Fig. 2 dargestellten Vorderachsträger 10 vorteilhaft bereits zwei Aufnahmen 20 für die Befestigung des hier nicht dargestellten Lenkgetriebes ausreichend sind.

Erfindungsgemäß sind nun wenigstens einzelne der vorgenannten Aufnahmen 12, 16, 20 und 22 über stabförmige Verbindungselemente 26 fachwerkartig im Vorderachsträger 10 integriert.

Die in Fahrtrichtung FR hintere Aufnahme 12 zur Lagerung jedes der Querlenker besitzt zumindest annähernd vertikal zur Fahrzeuglängsachse F beabstandete Aufnahmeglieder 12a und 12b zur umgreifenden Halterung des in Fahrtrichtung FR hinteren Lagers am hier nicht dargestellten Querlenker. Eine derartige Ausgestaltung der Aufnahme 12 ist vorteilhaft, die Erfindung ist auf diese Ausgestaltung der Aufnahme 12 aber nicht beschränkt. Wichtig ist die mögliche Integration einer anders ausgestalteten Aufnahme im Vorderachsträger mittels stabförmiger Verbindungselemente.

Die in Fahrtrichtung FR vordere Aufnahme 14 zur Lagerung jedes der Querlenker besitzt zwei zumindest annähernd in Fahrzeuglängsrichtung F beabstandete Aufnahmeglieder 14a und 14b zur U-förmig umgreifenden Halterung des in Fahrtrichtung FR vorderen Lagers am hier nicht dargestellten Querlenker.

Der Vorderachsträger 10 weist in Querrichtung zwischen den in Fahrtrichtung FR vorderen Aufnahmen 14 zur Lagerung jedes der Querlenkers wenigstens ein Versteifungselement in Form eines horizontal angeordneten, ebenen Flächenelements 28 auf, das in einer Ebene unterhalb der in den Aufnahmegliedern 14a und 14b vorgesehenen Bohrungen 32 angeordnet ist und dessen in Fahrtrichtung FR weisender Rand eine halbovalförmige Einbuchtung 30 aufweist.

Der Vorderachsträger 10 weist in Querrichtung zwischen den in Fahrtrichtung FR vorderen Aufnahmen 14 bzw. den daran anschließenden Auslegern 34 außerdem eine zusätzliche Versteifungsrippe 50, hier vertikal aufgerichtet, auf, die in das horizontal angeordnete, ebene Flächenelement 28 übergeht.

In den vorgenannten Auslegern 34 ist jeweils eine zweite Aufnahme 18 zur Befestigung des Vorderachsträgers 10 am Fahrzeugaufbau vorgesehen.

Der Vorderachsträger 10 weist au ßerdem ein annährend zentrales, an die Aufnahme 24 für die Lagerung der Pendelstütze zumindest teilweise anschließendes und entgegengesetzt der Fahrtrichtung FR sich aufweitendes flächiges Versteifungselement 36 auf, das wenigstens teilweise von Verstärkungsrippen 38 begrenzt ist. Das flächige Versteifungselement 36 bildet zum entgegengesetzt der Fahrtrichtung FR hinteren Rand hin eine Art Wulst 40, die auf der Unterseite hohl und im Querschnitt V-förmig ausgebildet ist.

Auf dem flächigen Versteifungselement 36 ist außerdem wenigstens eine Verstärkungsrippe 44 vorgesehen, die in Fahrzeuglängsrichtung F wenigstens teilweise zwischen dem hinteren Rand des flächigen Versteifungselements 36 und der Aufnahme 24 für die Lagerung der Pendelstütze angeordnet ist.

Jedes Aufnahmeglied 12a und 12b ist nun über zwei stabförmige Verbindungselemente 26 im Vorderachsträger 10 integriert. Abweichend davon weist das Aufnahmeglied 12a in Fig. 2 drei stabförmige Verbindungselemente 26 auf.

In beiden in Fig. 1 und 2 dargestellten Varianten ist aber das Aufnahmeglied 12a über ein stabförmiges Verbindungselement 26 mit der in Fahrtrichtung FR vorderen Aufnahme 14 bzw. dem daran anschließenden Ausleger 34 verbunden, wobei das stabförmige Verbindungselement 26 vorzugsweise annährend in Fahrzeuglängsrichtung F verläuft.

Die erste Aufnahme 16 zur Befestigung des Vorderachsträgers 10 am Fahrzeugaufbau ist in den in Fig. 1 und 2 dargestellten Ausführungsbeispielen an unterschiedlichen Positionen angeordnet, so dass die stabförmigen Verbindungselemente 26 auch unterschiedliche Anbindungsstellen, insbesondere in Bezug auf die Aufnahmen 20 und 22 für die Befestigung des Lenkgetriebes und die Befestigung des Stabilisators haben.

In dem in Fig. 2 dargestellten Ausführungsbeispiels weist das flächige Versteifungselement 36 am entgegengesetzt der Fahrtrichtung FR hinteren Rand Knotenpunkte 42 auf, in denen mehrere stabförmige Verbindungselemente 26 zusammenlaufen.

Das in Fig. 1 dargestellte Ausführungsbeispiel zeigt, dass die Aufnahmen 20 für die Befestigung des Lenkgetriebes und/oder die Aufnahmen 22 für die Befestigung des Stabilisators auch über Stege 48 an die stabförmigen Verbindungselemente 26 angebunden sein können.

### Bezugszeichenliste

(ist Teil der Beschreibung)
- 10: Vorderachsträger
- 12: hintere Aufnahme zur Lagerung Radführungsglied
- 12a: Lageraufnahmeglied
- 12b: Lageraufnahmeglied
- 14: vordere Aufnahme zur Lagerung Radführungsglied
- 14a: Lageraufnahmeglied
- 14b: Lageraufnahmeglied
- 16: 1. Aufnahme zur Befestigung des Vorderachsträges am Fahrzeugaufbau
- 18: 2. Aufnahme zur Befestigung des Vorderachsträges am Fahrzeugaufbau
- 20: Aufnahmen zur Befestigung eines Lenkgetriebes
- 22: Aufnahmen zur Befestigung des Stabilisators
- 24: Aufnahme zur Lagerung der Pendelstütze
- 26: stabförmige Verbindungselemente
- 28: Flächenelement
- 30: Einbuchtung
- 32: Bohrung
- 34: Ausleger
- 36: flächiges Versteifungselement
- 38: Verstärkungsrippe
- 40: Wulst
- 42: Knotenpunkt
- 44: Verstärkungsrippe
- 46: Fach
- 48: Steg
- 50: Versteifungsrippe

- F: Fahrzeuglängsrichtung/-achse
- FR: Fahrtrichtung

## Patentansprüche

1. Vorderachsträger (10) für Kraftfahrzeuge, bei dem jeweils zwei in Fahrzeuglängsrichtung (F) voneinander beabstandete Aufnahmen (12, 14) für die Lagerstellen zur Schwenklagerung je eines von zwei Radführungsgliedern, wie Quer- bzw. Dreieckslenker; und Aufnahmen (16, 18) zur Befestigung des Vorderachsträgers (10) als vorgefertigte Einheit mitsamt vormontierten Aggregaten am Fahrzeugaufbau vorgesehen sind, sowie wenigstens einzelne der nachfolgend angeführten Aufnahmen für
- die Befestigung des Lenkgetriebes (20)
- die Befestigung des Stabilisators (22)
- die Lagerung einer Pendelstütze (24)
und der Vorderachsträger (10) als mit diesen Aufnahmen (12, 14, 16, 18, 20, 22, 24) einstückiges und diese untereinander verbindendes Bauteil hergestellt ist, **dadurch gekennzeichnet, dass** wenigstens einzelne der Aufnahmen (12, 16, 20, 22) über stabförmige Verbindungselemente (26) fachwerkartig im Vorderachsträger (10) integriert sind, wobei der Vorderachsträger (10) in Querrichtung zwischen den in Fahrtrichtung (FR) vorderen Aufnahmen (14) zur Lagerung jedes der Radführungsglieder wenigstens ein Versteifungselement in Form eines horizontal angeordneten Flächenelements (28) aufweist, wobei das horizontal angeordnete Flächenelement (28) eben ausgebildet ist und/oder der in Fahrtrichtung (FR) weisende Rand des Flächenelements (18) eine halbovalförmige Einbuchtung (30) aufweist.

2. Vorderachsträger (10) für Kraftfahrzeuge nach Anspruch 1, **dadurch gekennzeichnet, dass** zwei, vorzugsweise vier, besonders bevorzugt sechs, weiter besonders bevorzugt acht, weiter besonders bevorzugt zehn der Aufnahmen (12, 16, 20, 22) über stabförmige Verbindungselemente (26) fachwerkartig im Vorderachsträger (10) integriert, vorzugsweise direkt miteinander verbunden sind.

3. Vorderachsträger (10) für Kraftfahrzeuge nach Anspruch 1 oder 2, **dadurch gekennzeichnet, dass** die in Fahrtrichtung (FR) hintere Aufnahme (12) zur Lagerung jedes der Radführungsglieder zumindest annähernd vertikal zur Fahrzeuglängsachse (F) beabstandete Aufnahmeglieder (12a, 12b) besitzt, zur umgreifenden Halterung des in Fahrtrichtung (FR) hinteren Lagers am Radführungsglied, wobei vorzugsweise jedes Aufnahmeglied (12a, 12b) über wenigstens ein, vorzugsweise über wenigstens zwei stabförmige Verbindungselemente (26) im Vorderachsträger (10) integriert ist.

4. Vorderachsträger (10) nach einem der Ansprüche 1 bis 3, **dadurch gekennzeichnet, dass** wenigstens ein, vorzugsweise jedes Aufnahmeglied (12a, 12b) über ein stabförmiges Verbindungselemente (26) mit einer ersten Aufnahme (16) für Befestigungsmittel zur Festlegung des Vorderachsträgers (10) am Fahrzeugaufbau verbunden ist.

5. Vorderachsträger (10) nach einem der Ansprüche 1 bis 4, **dadurch gekennzeichnet, dass** wenigstens ein Aufnahmeglied (12a, 12b) über ein stabförmiges Verbindungselement (26) mit der in Fahrtrichtung (FR) vorderen Aufnahme (14) zur Lagerung jedes der Radführungsglieder verbunden ist, wobei das stabförmige Verbindungselement vorzugsweise annährend in Fahrzeuglängsrichtung (F) verläuft.

6. Vorderachsträger (10) nach einem der Ansprüche 1 bis 5, **dadurch gekennzeichnet, dass** die in Fahrtrichtung (FR) vordere Aufnahme (14) zur Lagerung jedes der Radführungsglieder zwei zumindest annähernd in Fahrzeuglängsachse (F) beabstandete Aufnahmeglieder (14a, 14b) besitzt, zur U-förmig umgreifenden Halterung des in Fahrtrichtung (FR) vorderen Lagers am Radführungsglied.

7. Vorderachsträger (10) nach Anspruch 1, **dadurch gekennzeichnet, dass** das horizontal angeordnete Flächenelement (28) in einer Ebene unterhalb der in den Aufnahmegliedern (14a, 14b) vorgesehenen Bohrungen (32) angeordnet ist.

8. Vorderachsträger (10) nach einem der Ansprüche 1 bis 7, **dadurch gekennzeichnet, dass** eine erste Aufnahme (16) zur Befestigung des Vorderachsträgers (10) am Fahrzeugaufbau vorgesehen ist, welche das in Fahrtrichtung (VR) hintere Ende des Vorderachsträgers (10) bildet.

9. Vorderachsträger (10) nach einem der Ansprüche 1 bis 8, **dadurch gekennzeichnet, dass** eine zweite Aufnahme (18) zur Befestigung des Vorderachsträgers (10) am Fahrzeugaufbau vorgesehen ist, welche in einen Ausleger (34) integriert im unmittelbaren Bereich der in Fahrtrichtung (F) vorderen Aufnahme (14) zur Lagerung jedes der Radführungsglieder angeordnet ist.

10. Vorderachsträger (10) nach einem der Ansprüche 1 bis 9, **dadurch gekennzeichnet, dass** derselbe (10) ein zentrales, an die Aufnahme (24) für die Lagerung der Pendelstütze zumindest teilweise anschließendes und entgegengesetzt der Fahrtrichtung (FR) sich aufweitendes flächiges Versteifungselement (36) aufweist, wobei auf dem flächigen Versteifungselement (36) wenigstens eine Verstärkungsrippe (44) vorgesehen ist, die vorzugsweise in Fahrzeuglängsrichtung wenigstens teilweise zwischen dem hinteren Rand des flächigen Versteifungselements (36) und der Aufnahme (24) für die Lagerung der Pendelstütze angeordnet ist.

11. Vorderachsträger (10) nach einem der Ansprüche 1 bis 10, **dadurch kennzeichnet, dass** der Vorderachsträger (10) aus Leichtmetall, vorzugsweise aus einer Aluminium-Legierung, hergestellt ist.

12. Vorderachsträger (10) nach einem der Ansprüche 1 bis 11, **dadurch gekennzeichnet, dass** das Bauteil in einem Aluminiumgussverfahren, vorzugsweise im Kokillengussverfahren, besonders bevorzugt im Kippkokillengussverfahren, hergestellt ist.

13. Vorderachsträger (10) für Kraftfahrzeuge nach einem der Ansprüche 1 bis 12, **dadurch gekennzeichnet, dass** die Aufnahmen (20) für die Befestigung des Lenkgetriebes und/oder die Aufnahmen (22) für die Befestigung des Stabilisators an die stabförmigen Verbindungselemente (26) über Stege (48) angebunden sind.

14. Vorderachsträger (10) für Kraftfahrzeuge nach Anspruch 1, **dadurch gekennzeichnet, dass** die Aufnahmen derart miteinander verbunden sind, dass im Vorderachsträger gewichtsreduzierende Aussparungen in Form von Durchbrüchen und/oder einseitig offenen Aushöhlungen verbleiben, ohne dass die Fahrwerkskinematik nachteilig beeinflusst wird.

## Claims

1. A front axle carrier (10) for motor vehicles, in which in each case two receptacles (12,14), which are spaced apart from one another in the longitudinal direction (F) of the vehicle, for the bearing locations for pivoting mounting of one of two wheel-guidance members, respectively, such as transverse or triangular control arms; and receptacles (16, 18) for fastening the front axle carrier (10) as a premanufactured unit including premounted assemblies are provided on the vehicle structure, as well as at least some of the receptacles set out below for
- fastening the steering gear (20),
- fastening the stabiliser (22),
- mounting a pendulum support (24),
and the front axle carrier (10) is produced as a component which is in one piece with said receptacles (12, 14, 16, 18, 20, 22, 24) and which connects these to one another, **characterised in that** at least some of the receptacles (12, 16, 20, 22) are integrated via rod-shaped connecting elements (26) in a latticed manner in the front axle carrier (10), wherein the front axle carrier (10) has, in the transverse direction between the receptacles (14) at the front in the direction of travel (FR) for mounting each of the wheel-guidance members, at least one stiffening element in the form of a horizontally arranged surface element (28), wherein the horizontally arranged surface element (28) is formed to be flat and/or the edge directed in the direction of travel (FR) of the surface element (18) has a semi-oval indentation (30).

2. The front axle carrier (10) for motor vehicles according to Claim 1, **characterised in that** two, preferably four, particularly preferably six, further particularly preferably eight, further particularly preferably ten, of the receptacles (12, 16, 20, 22) are integrated via rod-shaped connecting elements (26) in a latticed manner in the front axle carrier (10), preferably connected directly to one another.

3. The front axle carrier (10) for motor vehicles according to Claim 1 or 2, **characterised in that** the receptacle (12) at the rear in the direction of travel (FR) for mounting of each of the wheel-guidance members has receptacle members (12a, 12b) which are spaced apart at least approximately vertically with respect to the longitudinal axis (F) of the vehicle, for engaging-around holding of the bearing at the rear in the direction of travel (FR) on the wheel-guidance member, wherein preferably each receptacle member (12a, 12b) is integrated via at least one, preferably via at least two rod-shaped connecting elements (26) in the front axle carrier (10).

4. The front axle carrier (10) according to any one of Claims 1 to 3, **characterised in that** at least one, preferably each receptacle member (12a, 12b) is connected via a rod-shaped connecting element (26) to a first receptacle (16) for fastening means for fixing the front axle carrier (10) on the vehicle structure.

5. The front axle carrier (10) according to any one of Claims 1 to 4, **characterised in that** at least one receptacle member (12a, 12b) is connected via a rod-shaped connecting element (26) to the receptacle (14) at the front in the direction of travel (FR) for mounting each of the wheel-guidance members, wherein the rod-shaped connecting element extends preferably approximately in the longitudinal direction (F) of the vehicle.

6. The front axle carrier (10) according to any one of Claims 1 to 5, **characterised in that** the receptacle (14) at the front in the direction of travel (FR) for mounting each of the wheel-guidance members has two receptacle members (14a, 14b) which are spaced apart at least approximately in the longitudinal axis (F) of the vehicle, for U-shaped engaging-around holding of the bearing at the front in the direction of travel (FR) on the wheel-guidance member.

7. The front axle carrier (10) according to Claim 1, **characterised in that** the horizontally arranged surface element (28) is arranged in a plane below bores (32) provided in the receptacle members (14a, 14b).

8. The front axle carrier (10) according to any one of Claims 1 to 7, **characterised in that** a first receptacle (16) for fastening the front axle carrier (10) on the vehicle structure is provided and forms the end at the rear in the direction of travel (VR) of the front axle carrier (10).

9. The front axle carrier (10) according to any one of Claims 1 to 8, **characterised in that** a second receptacle (18) for fastening the front axle carrier (10) on the vehicle structure is provided and is arranged in a state integrated into an extension arm (34) in the immediate region of the receptacle (14) at the front in the direction of travel (F) for mounting each of the wheel-guidance members.

10. The front axle carrier (10) according to any one of Claims 1 to 9, **characterised in that** the front axle carrier (10) has a central, laminar stiffening element (36) which adjoins the receptacle (24) for mounting the pendulum support at least partially and which expands counter to the direction of travel (FR), wherein at least one reinforcing rib (44) is provided on the laminar stiffening element (36) and is arranged preferably in the longitudinal direction of the vehicle at least partially between the rear edge of the laminar stiffening element (36) and the receptacle (24) for mounting the pendulum support.

11. The front axle carrier (10) according to any one of Claims 1 to 10, **characterised in that** the front axle carrier (10) is produced from light metal, preferably from an aluminium alloy.

12. The front axle carrier (10) according to any one of Claims 1 to 11, **characterised in that** the component is produced using an aluminium casting method, preferably using the gravity die casting method, particularly preferably using the tilt die casting method.

13. The front axle carrier (10) for motor vehicles according to any one of Claims 1 to 12, **characterised in that** the receptacles (20) for fastening the steering gear and/or the receptacles (22) for fastening the stabilizer are linked to the rod-shaped connecting elements (26) via webs (48).

14. The front axle carrier (10) for motor vehicles according to Claim 1, **characterised in that** the receptacles are connected to one another in such a manner that recesses which reduce the weight in the front axle carrier remain in the form of apertures and/or cavities which are open on one side without the chassis kinematics being disadvantageously influenced.

## Revendications

1. Support d'essieu avant (10) pour véhicules automobiles sur lequel sont prévus respectivement deux logements (12, 14), espacés dans le sens longitudinal du véhicule (F), pour les points d'appui pour le logement pivotant respectivement de l'un des deux éléments de guidage de roue, comme des bras transversaux ou des bras triangulaires et des logements (16, 18) pour la fixation du support d'essieu avant (10) comme unité préfabriquée avec des ensembles pré-montés sur la carrosserie du véhicule, ainsi qu'au moins certains des logements mentionnés ci-dessous pour
- la fixation du mécanisme de direction (20)
- la fixation du stabilisateur (22)
- pour le logement d'un soutien pendulaire (24)
et le support d'essieu avant (10) étant un composant formant une seule pièce avec ces logements (12, 14, 16, 18, 20, 22, 24) et les reliant entre eux
**caractérisé en ce qu'**au moins certains de ces logements (12, 16, 20, 22) sont intégrés dans le support d'essieu avant (10), tel un colombage, au moyen d'éléments de liaison (26) en forme de barres, le support d'essieu avant (10) présentant, dans le sens transversal, au moins un raidisseur en forme d'élément de surface (28) disposé horizontalement entre les logements avant (14) dans le sens de la marche (FR) destinés à loger chaque élément de guidage de roue, l'élément de surface (28) disposé horizontalement étant plan et/ou le bord de l'élément de surface (18) dirigé dans le sens de la marche (FR) présentant un creux (30) de forme semi-ovale.

2. Support d'essieu avant (10) pour véhicules automobiles selon la revendication 1,
**caractérisé en ce que** deux, de préférence quatre, de manière particulièrement préférée six, de manière encore particulièrement préférée huit, de manière encore particulièrement préférée dix des logements (12, 16, 20, 22) sont intégrés dans le support d'essieu avant (10), tel un colombage, au moyen d'éléments de liaison (26) en forme de barres, de préférence reliés directement entre eux.

3. Support d'essieu avant (10) pour véhicules automobiles selon la revendication 1 ou la revendication 2,
**caractérisé en ce que** le logement arrière (12) dans le sens de la marche (FR) destiné à loger chacun des éléments de guidage de roue possède des éléments de logement (12a, 12b) espacés du moins approximativement verticalement par rapport à l'axe longitudinal du véhicule (F), pour le maintien enveloppant du palier arrière dans le sens de la marche (FR) sur l'élément de guidage de roue, chaque élément de logement (12a, 12b) étant intégré de préférence dans le support d'essieu avant (10) au moyen d'au moins un, de préférence au moyen d'au moins deux éléments de liaison (26) en forme de barres.

4. Support d'essieu avant (10) selon l'une quelconque des revendications 1 à 3,
**caractérisé en ce qu'**au moins un, de préférence chaque élément de logement (12a, 12b) est relié, au moyen d'un élément de liaison (26) en forme de barre, à un premier logement (16) pour des moyens de fixation afin d'immobiliser le support d'essieu avant (10) sur la carrosserie du véhicule.

5. Support d'essieu avant (10) selon l'une quelconque des revendications 1 à 4,
**caractérisé en ce qu'**au moins un élément de logement (12a, 12b) est relié, au moyen d'un élément de liaison (26) en forme d barre, au logement avant (14) dans le sens de la marche (FR) destiné à loger chacun des éléments de guidage de roue, l'élément de liaison en forme de barre étant orienté de préférence approximativement dans le sens longitudinal du véhicule (F) .

6. Support d'essieu avant (10) selon l'une quelconque des revendications 1 à 5,
**caractérisé en ce que** le logement avant (14) dans le sens de la marche (FR) destiné à loger chacun des éléments de guidage de roue, possède deux éléments de logement (14a, 14b) espacés du moins approximativement dans le sens longitudinal du véhicule(F), pour le maintien enveloppant en forme de U du palier avant dans le sens de la marche (FR) sur l'élément de guidage de roue.

7. Support d'essieu avant (10) selon la revendication 1,
**caractérisé en ce que** l'élément de surface (28) disposé horizontalement est disposé sur un plan en dessous des alésages (32) prévus dans les éléments de logement (14a, 14b).

8. Support d'essieu avant (10) selon l'une quelconque des revendications 1 à 7,
**caractérisé en ce qu'**un premier logement (16) est prévu sur la carrosserie du véhicule pour fixer le support d'essieu avant (10) et forme l'extrémité arrière, dans le sens de la marche (VR), du support de palier avant (10).

9. Support d'essieu avant (10) selon l'une quelconque des revendications 1 à 8,
**caractérisé en ce qu'**un deuxième logement (18) est prévu pour fixer le support d'essieu avant (10) sur la carrosserie du véhicule et, intégré dans une flèche (34), est disposé dans la zone immédiate du logement avant (14) dans le sens de la marche (F) destiné à loger chacun des éléments de guidage de roue.

10. Support d'essieu avant (10) selon l'une quelconque des revendications 1 à 9,
**caractérisé en ce que** ledit support d'essieu avant (10) présente un raidisseur plan (36) central adjacent, au moins en partie, au logement (24) destiné au logement du soutien pendulaire et s'élargissant dans le sens opposé au sens de la marche (FR), au moins une moulure de renfort (44), prévue sur le raidisseur plan (36), étant disposée de préférence dans le sens longitudinal du véhicule, au moins en partie entre le bord arrière du raidisseur plan (36) et le logement (24) destiné à loger le soutien pendulaire.

11. Support d'essieu avant (10) selon l'une quelconque des revendications 1 à 10,
**caractérisé en ce que** le support d'essieu avant (10) est fabriqué dans un métal léger, de préférence dans un alliage d'aluminium.

12. Support d'essieu avant (10) selon l'une quelconque des revendications 1 à 11,
**caractérisé en ce que** le composant est fabriqué dans un procédé de fonte d'aluminium, de préférence dans le procédé de fonte en coquille, de manière particulièrement préférée dans le procédé de coulée en coquille basculante.

13. Support d'essieu avant (10) pour véhicules automobiles selon l'une quelconque des revendications 1 à 12,
**caractérisé en ce que** les logements destinés à la fixation du mécanisme de direction et/ou les logements (22) destinés à la fixation du stabilisateur sont reliés aux éléments de liaison (26) en forme de barres par des entretoises (48).

14. Support d'essieu avant (10) pour véhicules automobiles selon la revendication 1,
**caractérisé en ce que** les logements sont reliés entre eux de telle manière qu'il reste, dans le support d'essieu avant, des évidements d'allègement en forme de d'ajours et/ou de cavités ouvertes d'un côté, sans que la cinématique du châssis n'en soit impactée défavorablement.
